# EUROPEAN PATENT APPLICATION

(11) **EP 4 299 235 A1**
(43) Date of publication of application: **03.01.2024**
(21) Application number: 22775994.1
(22) Date of filing: 18.03.2022
(51) Int. Cl.: B23K 26/36, B23K 26/062, B23K 26/06, H01M 50/531, B23K 101/36

(54) **LASER NOTCHING APPARATUS**

(30) Priority: 25.03.2021 KR 20210039067
(71) Applicant: Youilet Co., Ltd., Gyeonggi-do 17708 (KR)
(72) Inventor: CHUNG, Youn Gil, Seongnam-si Gyeonggi-do 13544 (KR)
(74) Representative: Schröer, Gernot H.
(86) International application number: PCT/KR2022/003811
(87) International publication number: WO 2022/203292

(57) **Abstract**

The present invention may provide a lase notching apparatus comprising: a laser irradiation unit including a first laser irradiating a first beam, a second laser irradiating a second beam, and an optical member which forms paths of the first beam and the second beam; and a control unit which moves a scanner of the laser irradiation unit along a notching line of an electrode, wherein the optical member forms the path of the first beam and the path of the second beam such that a first spot of the first beam and a second spot of the second beam are arranged apart from each other by a first distance on the notching line, and a size of the first spot is larger than a size of the second spot, and the control unit moves a reflective mirror of the laser irradiation unit such that a spot of the second beam follows a moving trajectory of a spot of the preceding first beam.

## Description

### CROSS-REFERENCE TO RELATED APPLICATION

This application claims priority from Korean Patent Application No. 1 0-2021-0039067 filed on March 25, 2021 in the Korean Intellectual Property Office, and all the benefits accruing therefrom under 35 U.S.C. 119, the contents of which in its entirety are herein incorporated by reference.

### Technical Field

The present invention relates to a laser notching apparatus for forming an electrode tab by irradiating a laser beam to an electrode for a secondary battery.

### Background Art

Electrodes of lithium secondary batteries are formed by applying a positive electrode active material or a negative electrode active material to a current collector and by drying thereafter. The electrode may be divided into a region where an active material is applied and a region where an active material is not applied. By notching the region where an active material is applied along with the region where an active material is not applied, an electrode tab may be formed.

A laser notching apparatus is an apparatus that forms an electrode tab by irradiating a beam to an electrode. When forming an electrode tab, if the beam is irradiated onto an active material, the material may absorb heat and transfer it to a current collector. In the case where the current collector is made of a material with a low melting point (e.g., aluminum), during laser notching, an issue arises where the current collector melts due to the heat transferred from the active material, causing protruding out of a cut surface. Furthermore, when electrodes are stacked, there is a problem of short-circuiting due to the contact between the protruding part of one current collector with the protruding part of another current collector.

Korean Patent Publication No. 10-2021-0001077 (published on January 6, 2021), discloses a configuration for forming an electrode tab by removing an active material in an area to be notched using a first laser, and then notching the area from which the active material has been removed using a second laser. However, the electrode transfer speed of the notching apparatus is fast, and the electrode is not physically secured during the electrode cutting process. The portion for removing the active material (first laser irradiation spot) and the portion for cutting the electrode (second laser irradiation spot) do not occur simultaneously in one location, but are separated by a certain distance. This results in a problem where the cutting line performed by the second laser does not precisely follow the line where the active material has been removed by the first laser, leading to notching defects.

Furthermore, the aforementioned laser notching method involves separate optical systems for generating and controlling the first laser and the second laser. This requires individual control of both lasers and separate scanners within each optical system. As a result, there is a significant cost associated with the configuration of the laser notching equipment.

### Detailed Description of the Invention

### Technical problem

Accordingly, embodiments are to address the above-mentioned problems, and are to provide a laser notching apparatus that facilitates aligning an ablation line with a cutting line by simultaneously performing ablation and electrode cutting in one location, thus ensuring stable formation of an electrode cutting line within an ablation region.

In other words, an object of the embodiments is to provide a laser notching apparatus that enables processes of removing an active material through ablation and notching an ablated region to proceed together consistently and rapidly in a notching region.

Additionally, an object of the embodiments is to provide a laser notching apparatus that simplifies the configuration of laser notching equipment and achieves price competitiveness by controlling the movement of two laser beams with a single scanner.

The objects to be achieved by the present invention are not limited to the foregoing objects, and additional objects, which are not mentioned herein, will be readily understood by those skilled in the art from the following description.

### Technical Solution

An embodiment may provide a laser notching apparatus including a laser irradiation unit including a first laser irradiating a first beam, a second laser irradiating a second beam, and an optical member which forms paths of the first beam and the second beam, and a control unit which moves a reflective mirror of the laser irradiation unit along a notching line of an electrode, wherein the optical member forms the path of the first beam and the path of the second beam such that a first spot of the first beam and a second spot of the second beam are arranged apart from each other by a first distance on the notching line, and a size of the first spot is larger than a size of the second spot, and the control unit moves a reflective mirror of the laser irradiation unit such that a spot of the second beam follows a moving trajectory of a spot of the preceding first beam.

Preferably, the electrode may include a current collector and an active material layer stacked on the current collector, the first beam may ablate the active material layer, and the second beam may cut the current collector exposed by the ablation of the first beam.

Preferably, the optical member may adjust one of a focal length of the first beam and a focal length of the second beam such that the size of the first spot is set to be larger than the size of the second spot.

Preferably, the optical member may include a lens unit disposed on the path of the first beam and the path of the second beam and configured to form a spot of the first beam and a spot of the second beam on the notching line, and a beam expander disposed between the second laser and the optical member on the path of the second beam, and the beam expander may adjust a focal length of the second beam that passes through the lens unit such that the size of the first spot is set to be larger than the size of the second spot.

Preferably, the optical member may include a lens unit disposed on the path of the first beam and the path of the second beam and configured to form a spot of the first beam and a spot of the second beam on the notching line, and a light refraction unit disposed on the path of the first beam, and the light refraction unit may refract the first beam such that an incident angle of the first beam on the lens unit and an incident angle of the second beam on the lens unit differ from each other.

Preferably, the first laser and the second laser may be configured as a single body, so that when the first laser moves along the notching line, the second laser can move together with the first laser.

Preferably, the optical member may change a position of the first spot such that a spacing direction between the first spot and the second spot is aligned with the notching line.

Preferably, the optical member may include a light refraction unit disposed on the path of the first beam, and when a direction of the notching line changes, the optical member may rotate the light refraction unit to change a position of the first spot such that the spacing direction between the first spot and the second spot is aligned with the notching line.

Preferably, the optical member may change the position of the first spot along a circular orbit centered on the second spot.

Preferably, the laser irradiation unit may turn off the first laser when the first spot is located in a certain area of the electrode where the active material layer is not present.

A laser notching apparatus according to another embodiment of the present invention includes a laser irradiation unit including a first laser irradiating a first beam, a second laser irradiating a second beam, and an optical member which forms paths of the first beam and the second beam; and a control unit which moves a reflective mirror of the laser irradiation unit along a notching line of an electrode, wherein the optical member adjusts focal lengths of the first beam and the second beam differently along the notching line, so that a size of a first spot of the first beam and a size of a second spot of the second beam differ from each other, and a single scanner is used to control the first beam and the second beam to cut the electrode along the notching line.

The optical member may adjust a divergence angle of the first beam or the second beam so that the first spot of the first beam or the second spot of the second beam, passing through the scanner, are different from each other in size.

The optical member may make incident angles of the first beam or the second beam incident on the single scanner different from each other so that the first spot and the second spot are maintained apart by a constant distance.

The size of the first spot may be larger than the size of the second spot, the electrode may include a current collector and an active material layer stacked on the current collector, the first beam may ablate the active material layer, and the second beam may cut the current collector exposed by the ablation of the first beam.

The optical member may include a lens unit disposed on the path of the first beam and the path of the second beam and configured to form the spot of the first beam and a spot of the second beam on the notching line, and a beam expander disposed between the second laser and the optical member on the path of the second beam, and the beam expander may adjust a divergence angle of the second beam such that the size of the second spot of the second beam that passes through the lens unit is smaller than the size of the first spot.

The optical member may include a lens unit disposed on the path of the first beam and the path of the second beam and configured to form a spot of the first beam and a spot of the second beam on the notching line, and a light refraction unit disposed on the path of the first beam.

The light refraction unit may rotate and refract the incident angle of the first beam such that the first spot maintains the constant distance from the second spot.

The light refraction unit may allow the first spot to rotate around the second spot and maintain the constant distance from the second spot.

The scanner may include the lens unit and the reflective mirror disposed on the path of the first beam and the path of the second beam and configured to control the first beam and the second beam incident on the lens unit, allowing the first spot and the second spot to move along the notching line.

The electrode may be in a stationary state or in motion when notching with the use of the first beam and the second beam is performed.

### Advantageous Effects

In an embodiment, a first laser and a second laser structurally move together, and an optical member is used to greatly reduce a distance between a first sop and a second spot and configure the second spot to precisely follow the trajectory of the first spot, thereby achieving an advantage in that processes of removing an active material through ablation and notching an ablated region are carried out in very close proximity (within approximately 10 mm) in a notching region.

In addition, by reducing the distance between the first spot and the second spot, the process of removing the active material through ablation and notching the ablated region can be conducted at a very close distance, thereby facilitating aligning the active material removed region with the cutting line for notching.

According to the embodiment, by removing the active material beforehand in the area where notching is conducted, an advantage is gained in preventing the occurrence of burrs on a current collector resulting from the melting of the current collector due to heat transferred from the active material, even when using a current collector containing a material with a low melting point. This, in turn, prevents short-circuits caused by the burrs coming into contact with the active material.

According to the embodiment, adjusting the focal length of the second beam performing notching allows for differentiation in the size of the first spot and the second spot.

According to the embodiment, the first spot's shape is configured as a rectangle by modifying the shape of the first beam performing ablation, thereby preventing overlap of the first spot and damage to the current collector caused by the first beam.

As per the embodiment, controlling the movement of the two laser beams with a single scanner simplifies an optical system configuration and achieves price competitiveness.

Moreover, according to the embodiment, adjusting the divergence angle of either the first or second beam allows for different focusing distances, and a larger spot is used for ablation and a smaller spot is used for notching.

Furthermore, according to the embodiment, a light refraction unit is rotated to change the incident angle of the first beam onto the scanner, enabling the first spot to revolve around the second spot of the second beam at regular intervals, thus maintaining a consistent distance. This also allows for a very close proximity between the first spot and the second spot, enabling the simultaneous execution of ablation and notching at nearly the same location.

### Brief Description of Drawings

FIG. 1 is a schematic diagram illustrating a laser notching apparatus according to an embodiment.
FIG. 2 is a side view of an electrode.
FIG. 3 is a plan view of the electrode of FIG. 2.
FIG. 4 is a diagram illustrating an example of a notching line of an electrode.

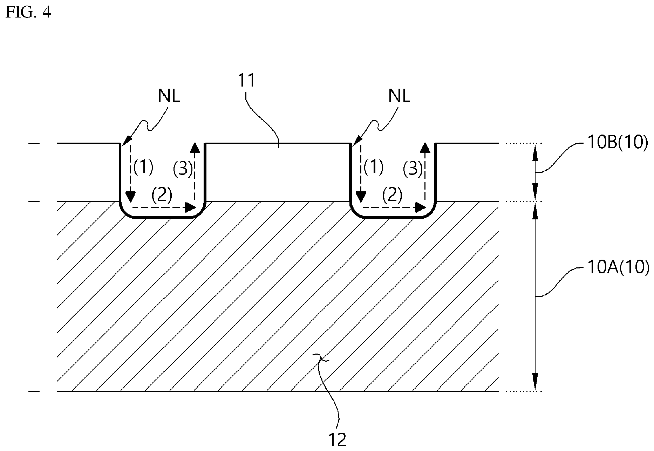

FIG. 4 is a diagram illustrating another example of a notching line of an electrode.

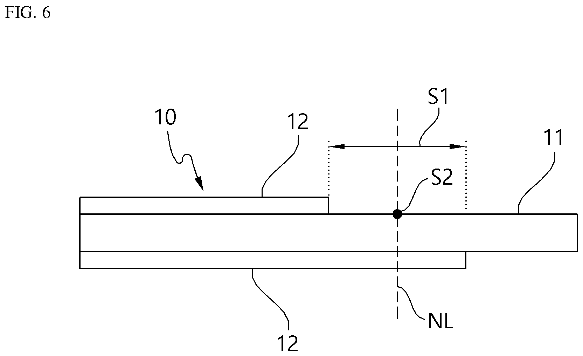

FIG. 6 is a side view of an electrode on which ablation has been performed.

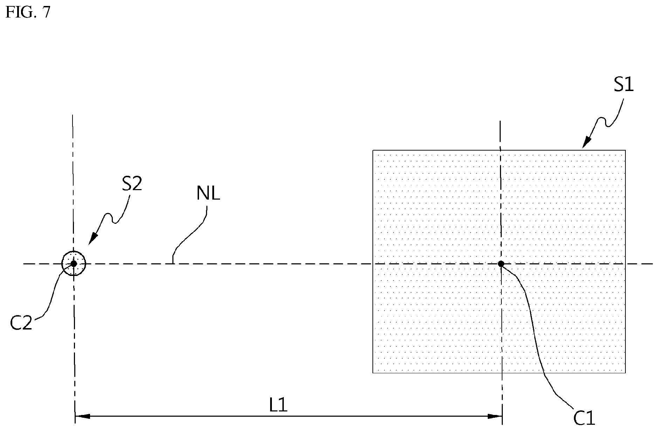

FIG. 7 is a diagram illustrating a first spot and a second spot.

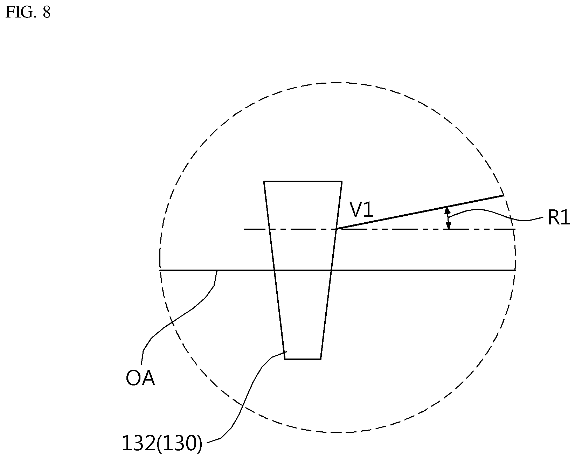

FIG. 8 is a diagram illustrating a first beam refracted at a predetermined angle in a light refraction unit.

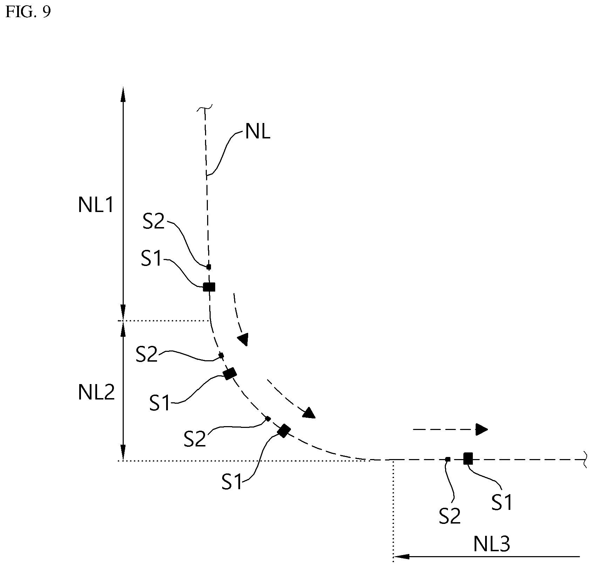

FIG. 9 is diagram illustrating a first spot and a second spot that move along the notching line extending from segment (1) to segment (2) shown in FIG. 4.

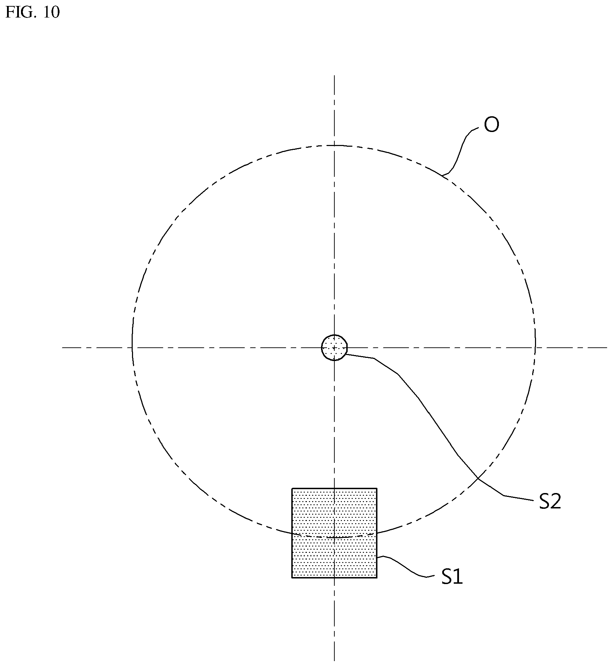

FIG. 10 is a diagram illustrating relative positions of the first spot and the second spot in a first region shown in FIG. 9.

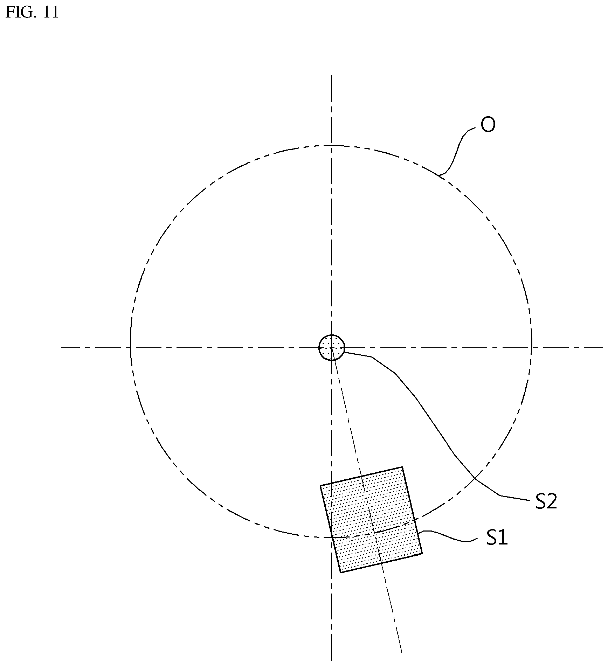

FIG. 11 is a diagram illustrating relative positions of the first spot and the second spot in a second region shown in FIG. 9.

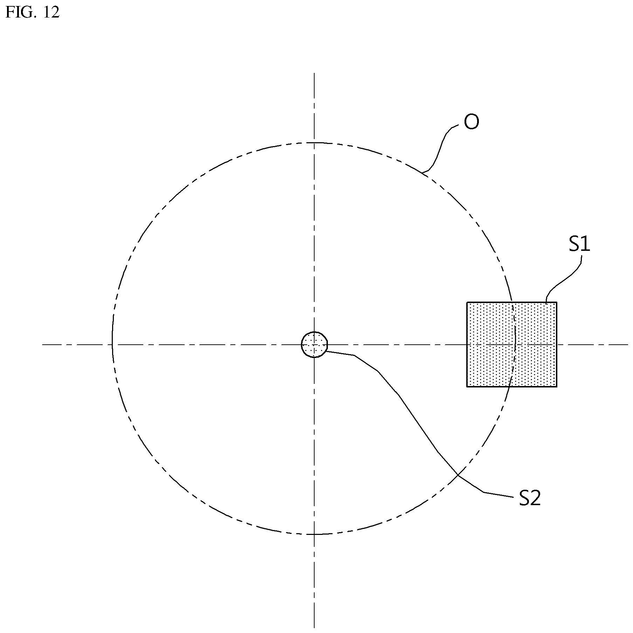

FIG. 12 is a diagram illustrating relative positions of the first spot and the second spot in a third region shown in FIG. 9.

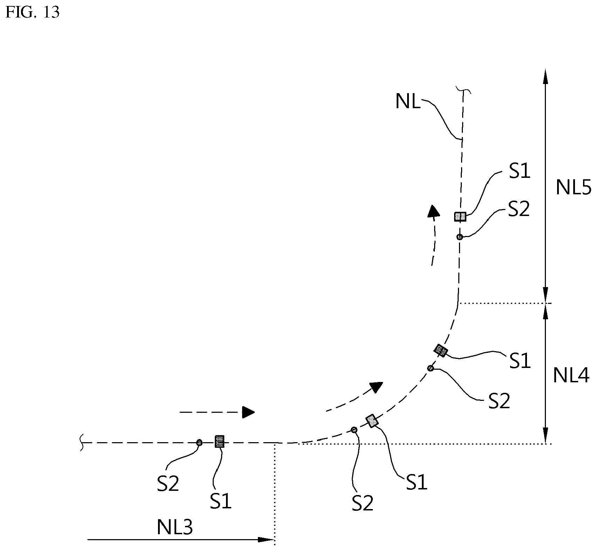

FIG. 13 is diagram illustrating a first spot and a second spot that move along the notching line extending from segment (2) to segment (3) shown in FIG. 4.

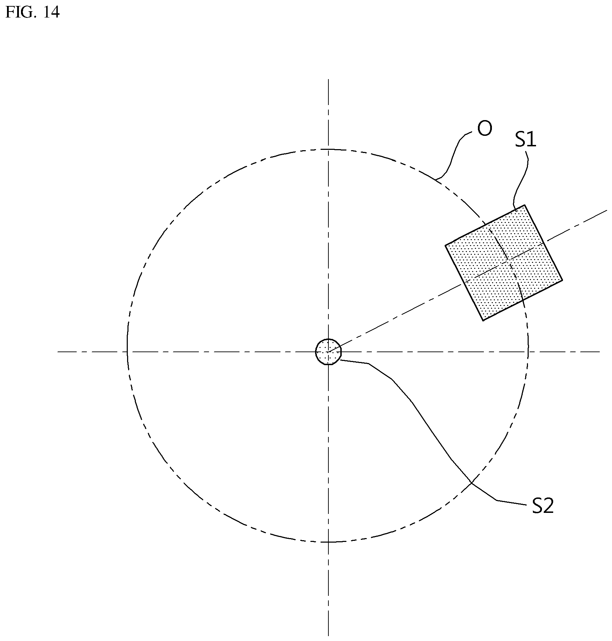

FIG. 14 is a diagram illustrating relative positions of the first spot and the second spot in a fourth region shown in FIG. 13.

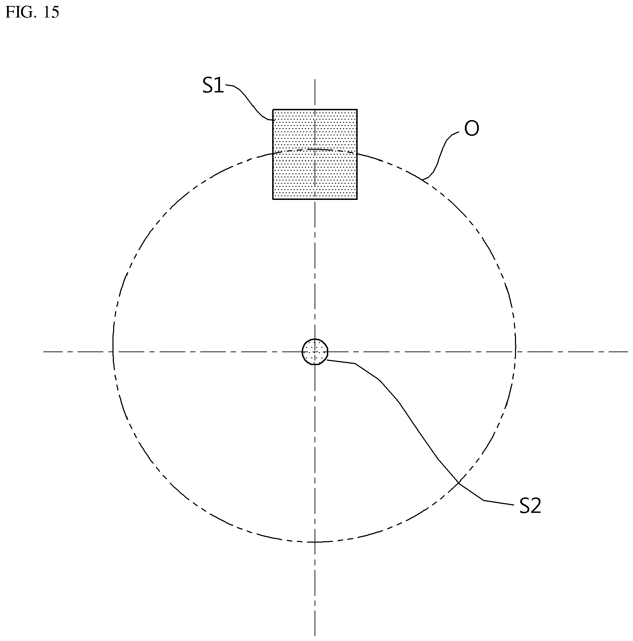

FIG. 15 is a diagram illustrating relative positions of the first spot and the second spot in a fifth region NL5 shown in FIG. 13.

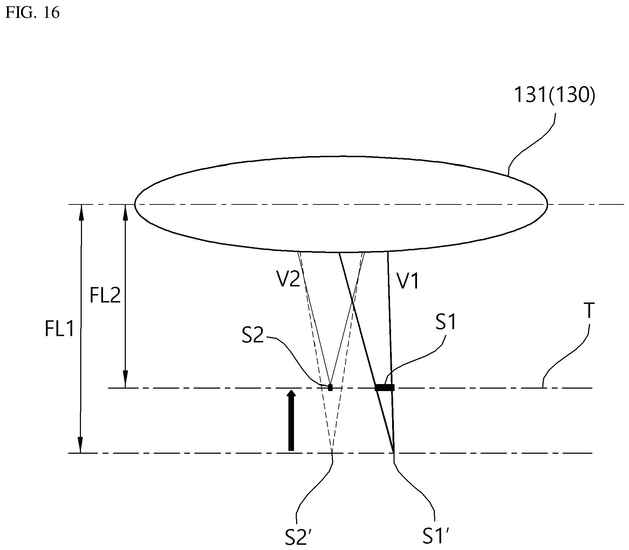

FIG. 16 is a diagram illustrating the process of adjusting the focal length of the second beam to ensure the size of the first spot of the first beam V1.

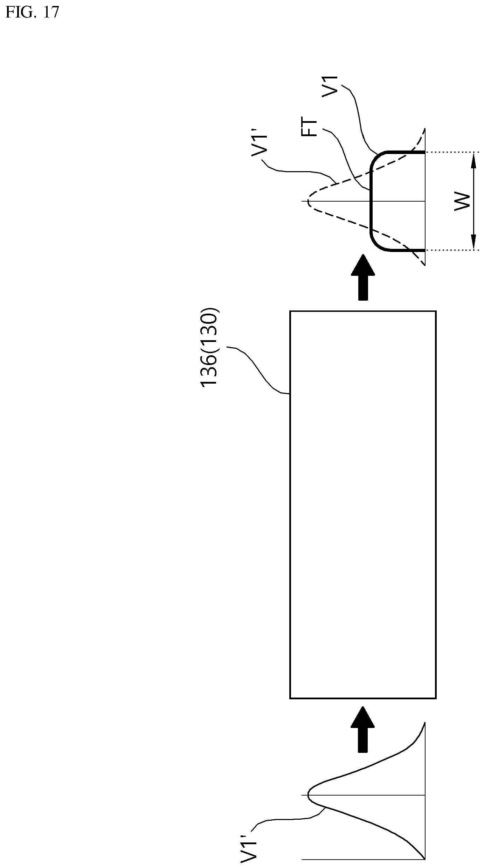

FIG. 17 is a diagram illustrating the process of changing the shape of the first beam using a beam shaper.

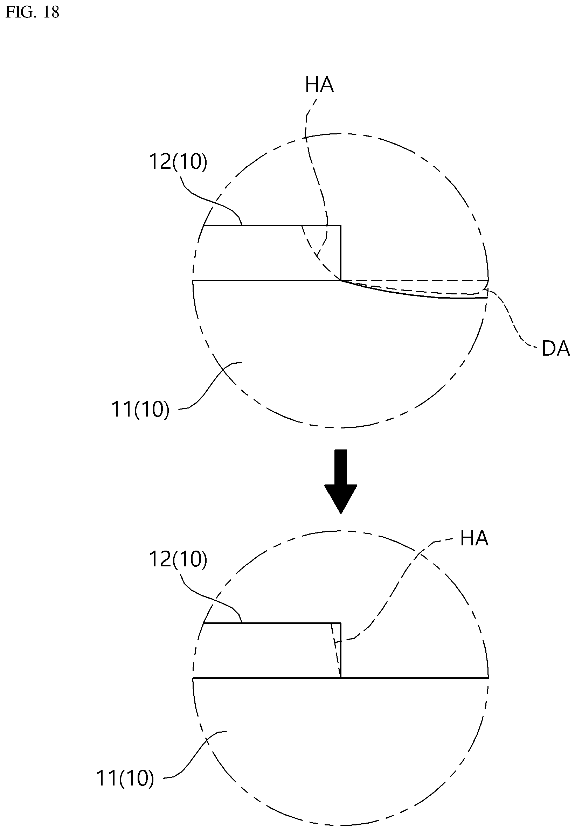

FIG. 18 is a side view of the electrode on which ablation has been performed using the first beam whose shape is changed by the beam shaper shown in FIG. 17.

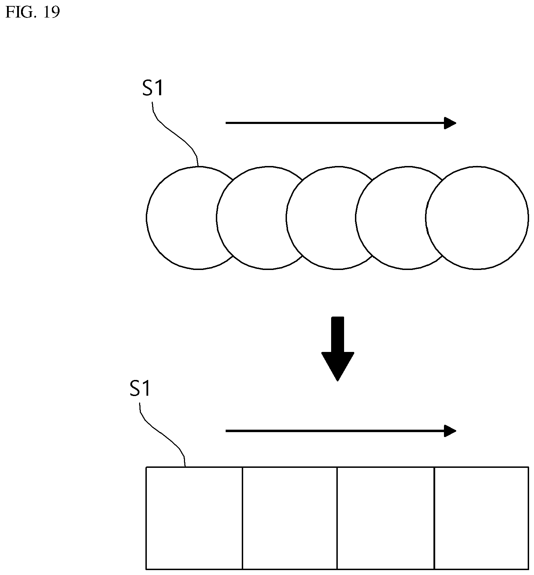

FIG. 19 is a diagram illustrating the shape of the first spot of the first beam whose shape has been changed by the beam shaper shown in FIG. 17.

### Mode for Invention

Hereinafter, preferred embodiments of the present invention will be described in detail with reference to the accompanying drawings.

The technical idea of the present invention is not limited to some embodiments to be described, and may be implemented in various other forms, and one or more of the components may be selectively combined and substituted for use within the scope of the technical spirit of the invention.

In addition, the terms (including technical and scientific terms) used in the embodiments of the invention, unless specifically defined and described explicitly, can be interpreted in a meaning that may be generally understood by those having ordinary skill in the art to which the invention pertains, and terms that are commonly used such as terms defined in a dictionary should be able to interpret their meanings in consideration of the contextual meaning of the relevant technology.

Further, the terms used in the embodiments of the invention are for explaining the embodiments and are not intended to limit the invention.

In this specification, the singular forms also may include plural forms unless otherwise specifically stated in a phrase, and in the case in which at least one (or one or more) of A and B, C is stated, it may include one or more of all combinations that may be combined with A, B, and C.

In describing the components of the embodiments of the invention, terms such as first, second. A, B, (a), and (b) can be used.

Such terms are only for distinguishing the component from other component, and may not be determined by the term by the nature, sequence or procedure etc. of the corresponding constituent element.

And when it is described that a component is "connected", "coupled" or "joined" to another component, the description may include not only being directly connected, coupled or joined to the other component but also being "connected" "coupled" or "joined" by another component between the component and the other component.

In addition, in the case of being described as being formed or disposed "above (on)" or "below (under)" of each component, the description includes not only when two components are in direct contact with each other, but also when one or more other components are formed or disposed between the two components. Furthermore, when expressed as "above (on)" or "below (under)", it may refer to a downward direction as well as an upward direction with respect to one element.

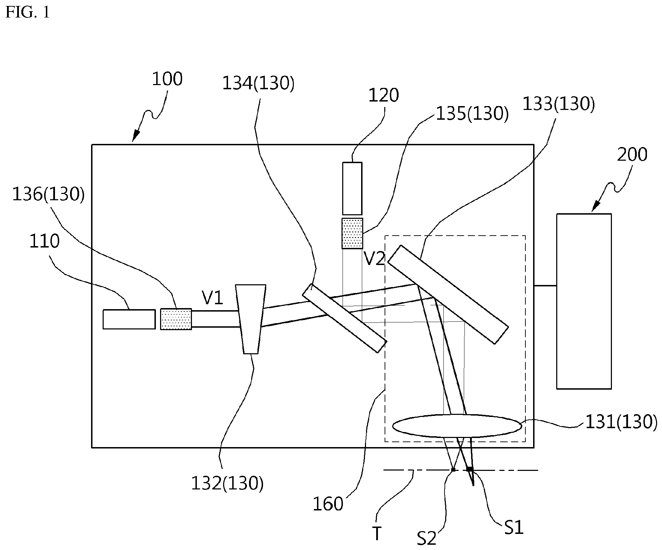

FIG. 1 is a schematic diagram illustrating a laser notching apparatus according to an embodiment.

Referring to FIG. 1, a laser notching apparatus according to an embodiment may include a laser irradiation unit 100 and a control unit 200. The laser irradiation unit 100 is a device that generates beams performing ablation and notching and transfers the generated beams to an electrode. The control unit 200 is a device that moves a reflective mirror 133 of the laser irradiation unit 100 along a notching line of the electrode.

Also, the laser irradiation unit 100 may include a first laser 110, a second laser 120, and an optical member 130. The first laser 110 generates a first beam V1. The first beam V1 may be an infrared (IR) laser beam. The first beam V1 performs ablation on a notching region of the electrode to remove an active material. The second laser 120 generates a second beam V2. The second beam V2 may be a green laser beam. The second beam V2 performs notching on the area of a current collector where the active material has been removed through ablation.

The irradiation direction of the first laser 110 and the incident direction of the second laser 120 may differ from each other. For example, the irradiation direction of the first laser 110 and the incident direction of the second laser 120 may be perpendicular to each other, or they may vary depending on the configuration of an optical system.

The optical member 130 creates paths for the first beam V1 and the second beam V2 to reach the electrode. The optical member 130 may include a lens unit 131, a light refraction unit 132, a movable reflective mirror 133, and a dichroic mirror 134. With respect to the path of the first beam V1, the optical refraction unit132, the dichroic mirror 134, the movable reflective mirror 133, and the lens unit 131 may be arranged in sequence. With respect to the path of the second beam V2, the dichroic mirror 134, the movable reflective mirror 133, and the lens unit 131 may be arranged in this order.

A scanner 160 consists of the reflective mirror 133 and the lens unit 131. In an embodiment of the present invention, a single scanner 160 simultaneously controls two lasers, the first beam V1 and the second beam (V2), so that the first spot S1 and the second spot S2 move along the notching line.

The scanner 160 moves under the control of the control unit 200. Specifically, the control unit 200 moves the reflective mirror 133 of the scanner 160. The reflective mirror 133 consists of two mirrors that move along an x-axis and a y-axis.

The lens unit 131 forms the first spot S1 of the first beam V1 and the second spot S2 of the second beam V2. The lens unit 131 separates the first spot S1 and the second spot S2 from each other on a reference plane T representing the position of the electrode. This lens unit 131 may be one of an F-theta lens, a telecentric lens, or a scanning lens.

The light refraction unit 132 is positioned in front of the first laser 110 to refract the first beam V1 at a specific angle, allowing the first spot S1 of the first beam V1 to be spaced apart from the second spot S2 on the reference plane T. This light refraction unit 132 may be a prism (optical wedge) or an acousto-optic modulator. In addition, various optical devices capable of refracting the exit angle of a beam may also be used as the light refraction unit 132.

The movable reflective mirror 133 is positioned between the dichroic mirror 134 and the lens unit 131 to guide the first beam V1 and the second beam V2 transmitted from the dichroic mirror 134 to the lens unit 131. This movable reflective mirror 133 may consist of two mirrors with different reflection directions.

The dichroic mirror 134 is disposed in front of the light refraction unit 132 and in front of the second laser 120, allowing the refracted first beam V1 from the light refraction unit 132 to pass therethrough and be transmitted to the side of the reflective mirror 133, while reflecting the second beam V2 emitted by the second laser 120 towards the side of the reflective mirror 133. In other words, the dichroic mirror 134 has a function of transmitting the first beam V1 and reflecting the second beam V2, selectively allowing incident beams to pass through or be reflected. Various mirrors capable of performing these functions may be used as the dichroic mirror 134.

In this optical member 130, the second spot S2 of the second beam V2, which passes through the lens unit 131, is positioned on an optical axis of the lens unit 131 and may be located at the focus of the lens unit 131. The first beam V1 has its angle refracted by the light refraction unit 132 and is reflected by the reflective mirror 133 before passing through the lens unit 131, resulting in the first spot S1 being spaced apart from the second spot S2 on the reference plane T. In the case of the second beam V2, while passing through a beam expander 135, the divergence angle of the second beam V2 is adjusted so that it focuses on the reference plane T. In other words, the focal length is defocused towards the reference plane T, ultimately making the size of the first spot S1 larger than that of the second spot S2. The larger first spot S1 is used for ablating the electrode, while the smaller second spot S2 is used for notching.

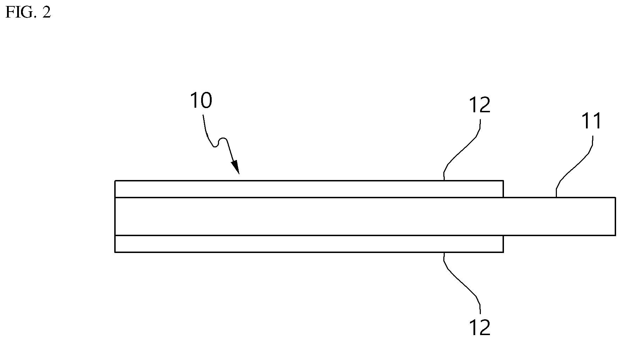

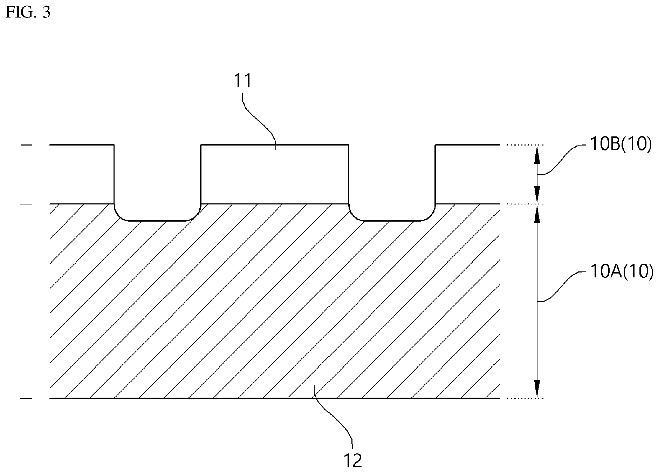

FIG. 2 is a side view of an electrode, and FIG. 3 is a plan view of the electrode shown in FIG. 2.

Referring to FIGS. 2 and 3, an electrode 10 may include a current collector 11 and active material layer 12 that is stacked on both one side and the other side of the current collector 11. The current collector 11 is configured to transmit current to or receive current from the active material layer 12 and may be made of a material such as copper or aluminum. In the embodiment, a current collector 11 made of aluminum will be described.

The electrode 10 may be divided into a coated portion 10A, where the active material layer 12 is located, and a non-coated portion 10B, which consists only of the current collector 11 without the active material layer 12. During a notching process, a part of the coated portion 10A and a part of the non-coated portion 10B may be notched and removed. After notching, the remaining non-coated portion 10B may be utilized as the electrode 10 tab.

FIG. 4 is a diagram illustrating an example of a notching line NL of the electrode 10.

Referring to FIG. 4, the notch line NL of the electrode 10 may consist of multiple segments with different directions. For example, as shown in (1) of FIG. 4, the notching line NL of the electrode 10 may be a continuous line that originates at the edge of the non-coated portion 10B, then progresses forward towards the coated portion 10A, as illustrated in (2) of FIG. 4, subsequently extends along the left-right direction of electrode 10 within the coated portion 10A, and finally, as seen in (C) of FIG. 4, continues to form rearward from the coated area 10A towards the edge of the non-coated portion 10B.

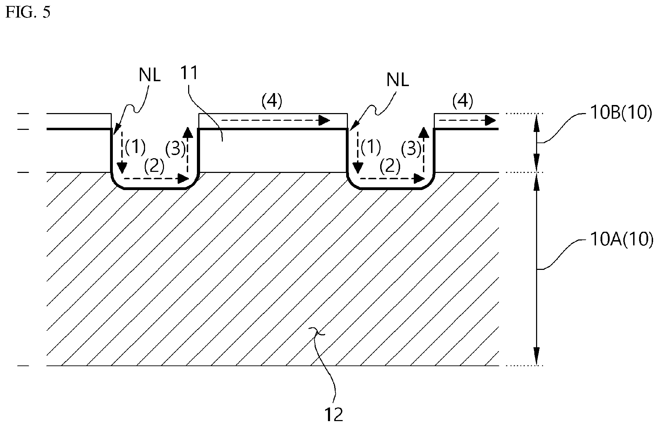

FIG. 5 is a diagram illustrating another example of the notching line NL of the electrode 10.

Referring to FIG. 5, as another example of the notching line NL of the electrode 10, the notching line NL may start at the edge of the non-coated portion 10B as shown in (1) of FIG. 5 and then extend forward, and then, as shown in (2) of FIG. 5, follows along the left-right direction of the electrode 10 within the coated portion 10A. Then, as shown in (C) of FIG. 5, it continues to form rearward from the coated portion 10A towards the edge of the non-coated portion 10B, and as shown in (D) of FIG. 5, it may form along the left-to-right direction of the electrode 10 within the non-coated portion 10B to the notching line NL of the next electrode 10.

The control unit 200 may move the reflective mirror 133 of the scanner 160 along the notching line NL illustrated in FIG. 4 or FIG. 5. As the reflective mirror 133 moves, both the first beam V1 and the second beam V2 move along the notching line NL.

FIG. 6 is a side view of an electrode 10 on which ablation has been performed.

Referring to FIG. 6, when ablation is performed at the first spot S1, the active material layer 12 on one side of the electrode 11 is removed by the first beam V1. As the second spot S2 passes through the area where the active material layer 12 is removed, notching is performed by the second beam V2. When the active material layer 12 is first removed from the area where notching is to be performed through the first beam V1, it is possible to prevent the occurrence of burrs on the current collector 11, resulting from the melting of the current collector 11 and protruding beyond the cutting surface due to the heat transferred from the active material layer 12. This, in turn, may prevent short-circuits caused by these burrs coming into contact with each other when multiple electrodes stack vertically.

FIG. 7 is a diagram illustrating the first spot S1 and the second spot S2.

Referring to FIG. 7, the first spot S1 and the second spot S2 are positioned at a first distance apart from each other. The center C1 of the first spot S1 and the center C2 of the second spot S2 may be located on the notching line NL. The first distance L1 may be defined as the distance between the centers of the first spot S1 and the second spot S2 on the notching line NL.

The first distance L1 may range from 0.5 mm to 10 mm. Even though the first laser 110 and the second laser 120 are physically far apart, the optical member 130 allows the user to set the first distance L1 so that the area passed by the first spot S1 on the notching line NL can be immediately followed by the second spot S2. In other words, the user may set the distance between the first spot S1 and the second spot S2 by adjusting the exit angle of the first beam V1 with the help of the light refraction unit 132.

The size of the first spot S1 may range from 0.3 mm to 1.5 mm. The size of the second spot S2 may be smaller than 0.1 mm.

FIG. 8 is a diagram illustrating the first beam V1 refracted at a predetermined angle in the light refraction unit 132.

Referring to FIG. 8, the light refraction unit 132 refracts the first beam V1 at a predetermined angle R1 relative to an optical axis OA. This is done to form an angle of incidence of the first beam V1 on the lens unit 131 to be inclined with respect to the optical axis of the lens unit 131, ensuring the first distance L1 between the first spot S1 and the second spot S2.

Additionally, the light refraction unit 132 may be configured to rotate around the optical axis OA. This is to adapt to changes in the direction of the notching line NL, which may shift from front-rear direction to the left-right direction., and to correspondingly adjust the position of the first spot S1, ensuring that the spacing direction between the first spot S1 and the second spot S2 aligns with the notching line NL. By rotating around the optical axis OA, the light refraction unit 132 enables the first spot S1 of the first beam V1 to move in a circular path around the second spot S2, aligning along the notching line NL both in front and behind the second spot. A motor (not shown) may be provided to rotate the light refraction unit 132. The light refraction unit 132 may utilize an optical component capable of causing refraction, such as a prism, an optical wedge, an acoustic-optic modulator, or the like.

FIG. 9 is diagram illustrating the first spot S1 and the second spot S2 that move along the notching line NL extending from segment (1) to segment (2) shown in FIG. 4, and FIG. 10 is a diagram illustrating relative positions of the first spot S1 and the second spot S2 in a first region NL1 shown in FIG. 9.

Referring to FIGS. 8 to 10, within segment (1) shown in FIG. 4, the rotation of the light refraction unit 132 may be adjusted to align the first spot S1 in line with the second spot S2 in the front-rear direction within the first region NL1 of the notching line NL that extends forward from the edge of the non-coated portion 10B toward the coated portion 10A. For example, in the first region NL1, the light refraction unit 132 may be positioned at the rotation origin. In the first region NL1, the first spot S1 advances ahead of the second spot S2, and the direction of movement of the first spot S1 and the second spot S2 is controlled by the reflective mirror 133. The first region NL1 corresponds to the non-coated portion 10B, and in the first region NL1, the first laser 110 may be in the "Off' state.

A curved segment transitioning from section (1) to section (2) as shown in FIG. 4 corresponds to a second region NL2 of the notching line NL. The second region NL2 may correspond to the coated portion 10A. Therefore, in the second region NL2, the first laser 110 may be in the "On" state. The reflective mirror 133 is adjusted to cause the first spot S1 and the second spot S2 to move along the curved segment, which is the second region NL2, and the light refraction unit 132 rotates, causing a change in the position of the first spot S1.

FIG. 11 is a diagram illustrating relative positions of the first spot S1 and the second spot S2 in the second region NL2 shown in FIG. 9.

Referring to FIGS. 9 and 11, as the light refraction unit 132 rotates, the first spot S1 starts moving along a circular path O centered around the second spot S2, allowing the first spot S1 to pass ahead of the area where the second spot S2 passes.

FIG. 12 is a diagram illustrating relative positions of the first spot S1 and the second spot S2 in a third region NL3 shown in FIG. 9.

Corresponding to section (2) shown in FIG. 4, a straight segment moving in the left-right direction corresponds to the third region NL3 of the notching line NL. The third region NL3 may correspond to the coated portion 10A. Therefore, in the third region NL3, the first laser 110 may be in the "On" state. As the first spot S1 and the second spot S2 move along the straight segment in the third region NL3, the light refraction unit 132 continues to rotate, causing the position of the first spot S 1 to change to a position rotated 90° from the origin.

FIG. 13 is diagram illustrating the first spot S1 and the second spot S2 that move along the notching line NL extending from segment (2) to segment (3) shown in FIG. 4, and FIG. 14 is a diagram illustrating relative positions of the first spot S1 and the second spot S2 in a fourth region NL4 shown in FIG. 13.

Referring to FIGS. 13 and 14, a curved segment transitioning from segment (2) to segment (3) as shown in FIG. 4 corresponds to the fourth region NL4 of the notching line NL. The fourth region NL4 may correspond to the coated portion 10A. Therefore, in the fourth region NL4, the first laser 110 may be in the "On" state. As the first spot S1 and the second spot S2 move along the curved segment in the fourth region NL4, the light refraction unit 132 rotates, causing a change in the position of the first spot S1.

As the light refraction unit 132 rotates, the first spot S1 starts moving again along a circular orbit (O) centered on the second spot S2 to allow the first spot S 1 to pass ahead of the area where the second spot S2 passes.

FIG. 15 is a diagram illustrating relative positions of the first spot S1 and the second spot S2 in a fifth region NL5 shown in FIG. 13.

In segment (3) shown in FIG. 4, within the fifth region NL5 of the notching line NL, which moves rearward from the coated portion 10A toward the non-coated portion 10B, the rotation of the light refraction unit 132 may be adjusted to align the first spot S1 and the second spot S2 in the front-rear direction. For example, the position of the first spot S1 may be changed to a position rotated 180° from the origin. The fifth region NL5 corresponds to the non-coated portion 10B, so the first laser 110 may be in the "Off' state.

FIG. 16 is a diagram illustrating the process of adjusting the focal length of the second beam V2 to ensure the size of the first spot S1 of the first beam V1.

Referring to FIG. 1 and 16, by adjusting the focal length of the second beam V2, it is possible to provide the first spot S1 having a size larger than that of the second spot S2.

To this end, the optical member 130 may include a beam expander 135. The beam expander 135 may be placed between the second laser 120 and the dichroic mirror 134 on the path of the second beam V2. The beam expander 135 may adjust the focal length of the second beam V2 that passes through the lens unit 131. The beam expander 135 may change the divergence angle of the second beam V2, thereby altering the focal position of the second beam V2. In this embodiment, the focal position is changed from S2' to S2. As a result, when the position of S2 is on the reference plane (T), the first spot becomes S1 rather than S1' and increases in size.

To explain again, at a focal length FL1 of the lens unit 131, the sizes of the first spot S1' and the second spot S2' are not significantly different because the focus S1 of the first beam V1 matches the focus S2' of the second beam V2. When the focal length of the second beam V2 is changed from FL1 to FL2 using the beam expander 135, the second beam V2 may be in focus at the changed focal length (FL2) while the first beam V1 may be enlarged to the size of the first spot S1. The optical device 130 may be designed to position the reference plane T at the changed second focal length FL2.

FIG. 17 is a diagram illustrating the process of changing the shape of the first beam V1 using a beam shaper.

Referring to FIG. 17, the shape of the first beam V1 may be modified to achieve a convenient shape for notching. To this end, the optical member 130 may include a beam shaper 136. The beam shaper 136 may be placed between the first laser 110 and the light refraction unit 132 on the path of the first beam V1. The beam shaper 136 may transform the Gaussian beam shape of the first beam V1' into a flat top FT shape to implement a rectangular spot shape with a constant width w.

FIG. 18 is a side view of the electrode 10 on which ablation has been performed using the first beam V1 whose shape is changed by the beam shaper 136 shown in FIG. 17. Referring to FIG. 18, with the Gaussian beam shape of the first beam V1', an area HA that applies heat to the active material layer 12 located in the ablation region when removing the active material layer (12) is considerably large. The sharp central portion of the Gaussian-shaped first beam V1' exceeds the average energy when viewed from an energy perspective, resulting in excess energy that can damage DA the entire current collector (see the upper illustration in FIG. 18).

When the first beam V1 is transformed into a flat top shape by the beam shaper 136, it allows for precise control of the area HA that applies heat to the active material layer 12 located in the ablation region. Additionally, it significantly reduces the excess energy portion from an energy perspective, preventing damage to the entire current collector. In other words, with the Gaussian beam shape of the first beam V1', excessive energy irradiation to the entire current collector 11 may result in a loss area. However, when the first beam V1 is transformed into a flat top shape, damage to the entire current collector may be prevented (see the lower illustration in FIG. 18).

FIG. 19 is a diagram illustrating the shape of the first spot S1 of the first beam V1 whose shape has been changed by the beam shaper 136 shown in FIG. 17.

Referring to FIG. 19, the Gaussian beam-shaped first beam V1 has the first spot S1 with a circular shape. Therefore, the Gaussian beam-shaped first beam V1 has a circular-shaped first spot S1, resulting in uneven edges in the ablation area and inevitable overlap of the first spot (S1). In contrast, the shape of the first spot S1 of the first beam V1 transformed into a flat top shape is rectangular, providing the advantage of having clean, straight edges in the area where ablation is performed, and the first spot S1 does not overlap.

In an embodiment of the present invention, when notching is performed by the first beam V1 and the second beam V2, the electrode may momentarily be in a stationary state. In other words, a conveyor that moves the electrode moves and stops repeatedly, allowing notching to be carried out by the first beam V1 and the second beam V2 while the electrode is in a stationary state when stopped.

Conversely, notching with the use of the first beam V1 and the second beam V2 may also be performed while the electrode continues to move.

Notching while the electrode is in motion is typically employed in roll-to-roll structures, where the electrode is unrolled, notched, and then wound back onto a roll. The moving speed of the electrode is measured while it is in motion without stopping for notching, and the measured information is fed back to a device for controlling the movement of a laser to control the movement of the laser, adjusting the laser's motion based on the moving speed of the electrode to achieve a desired electrode pattern. This method is generally used because of its high-speed operation.

On the other hand, notching while the electrode is fixed is typically used in roll-to-sheet structures, where the electrode is unrolled, notched, and undergoes cutting before being stacked on a magazine in sheet form. During the time when the electrode is cut, the electrode remains stationary, allowing notching to be performed. While this method offers greater notching precision, it may be less advantageous in terms of production speed.

The present invention has the advantage of being able to perform notching when the electrode is in a stationary state or when the electrode is continuously in motion.

A laser notching apparatus according to an exemplary preferred embodiment of the present invention has been particular shown and described in detail with reference to the accompanying drawings.

The above described embodiment of the present invention should be considered in a descriptive sense only and not for purposes of limitation. Therefore, the scope of the invention is defined not by the detailed description of the invention but by the appended claims It should also be understood that all changes or modifications derived from the definitions and scopes of the claims and their equivalents fall within the scope of the invention.

### INDUSTRIAL APPLICABILITY

The present invention can be efficiently applied in the field of manufacturing electrodes for secondary batteries.

## Claims

1. A laser notching apparatus comprising:
a laser irradiation unit (100) comprising a first laser (110) irradiating a first beam (V1), a second laser (120) irradiating a second beam (V2), and an optical member (130) which forms paths of the first beam (V1) and the second beam (V2); and
a control unit (200) which moves a reflective mirror (133) of the laser irradiation unit (100) along a notching line (NL) of an electrode (10),
wherein the optical member (130) forms the path of the first beam (V1) and the path of the second beam (V2) such that a first spot (S1) of the first beam (V1) and a second spot (S2) of the second beam (V2) are arranged apart from each other by a first distance on the notching line (NL), and a size of the first spot (S1) is larger than a size of the second spot (S2), and the control unit (200) moves the reflective mirror (133) of the laser irradiation unit (100) such that a spot of the second beam (V2) follows a moving trajectory of a spot of the preceding first beam (V1).

2. The laser notching apparatus of claim 1, wherein the electrode (10) comprises a current collector (11) and an active material layer (12) stacked on the current collector (11),
the first beam (V1) ablates the active material layer (12), and
the second beam (V2) cuts the current collector (11) exposed by the ablation of the first beam (V1).

3. The laser notching apparatus of claim 2, wherein the optical member (130) adjusts one of a focal length of the first beam (V1) and a focal length of the second beam (V2) such that the size of the first spot (S1) is set to be larger than the size of the second spot (S2).

4. The laser notching apparatus of claim 2, wherein the optical member (130) comprises a lens unit disposed on the path of the first beam (V1) and the path of the second beam (V2) and configured to form a spot of the first beam (V1) and a spot of the second beam (V2) on the notching line (NL), and a beam expander disposed between the second laser and the optical member on the path of the second beam (V2), and
the beam expander adjusts a focal length of the second beam (V2) that passes through the lens unit such that the size of the first spot (S1) is set to be larger than the size of the second spot (S2).

5. The laser notching apparatus of claim 2, wherein the optical member (130) comprises a lens unit (131) disposed on the path of the first beam (V1) and the path of the second beam (V2) and configured to form a spot of the first beam (V1) and a spot of the second beam (V2) on the notching line (NL), and a light refraction unit (132) disposed on the path of the first beam (V1), and
the light refraction unit (132) refracts the first beam (V1) such that an incident angle of the first beam (V1) on the lens unit (131) and an incident angle of the second beam (V2) on the lens unit (131) differ from each other.

6. The laser notching apparatus of claim 2, wherein the first laser (110) and the second laser (120) are configured as a single body, so that when the first laser (110) moves along the notching line (NL), the second laser (120) can move together with the first laser (110).

7. The laser notching apparatus of claim 6, wherein the optical member (130) changes a position of the first spot (S1) such that a spacing direction between the first spot (S1) and the second spot (S2) is aligned with the notching line (NL).

8. The laser notching apparatus of claim 7, wherein the optical member (130) comprises a light refraction unit (132) disposed on the path of the first beam (V1), and
when a direction of the notching line (NL) changes, the optical member (130) rotates the light refraction unit (132) to change a position of the first spot (S1) such that the spacing direction between the first spot (S1) and the second spot (S2) is aligned with the notching line (NL).

9. The laser notching apparatus of claim 8, wherein the optical member (130) changes the position of the first spot (S1) along a circular orbit centered on the second spot (S2).

10. The laser notching apparatus of claim 2, wherein the laser irradiation unit (100) turns off the first laser (110) when the first spot (S1) is located in a certain area of the electrode where the active material layer (12) is not present.

11. A laser notching apparatus comprising:
a laser irradiation unit (100) comprising a first laser (110) irradiating a first beam (V1), a second laser (120) irradiating a second beam (V2), and an optical member (130) which forms paths of the first beam (V1) and the second beam (V2); and
a control unit (200) which moves a reflective mirror (133) of the laser irradiation unit (100) along a notching line (NL) of an electrode (10),
wherein the optical member (130) adjusts focal lengths of the first beam (V1) and the second beam (V2) differently along the notching line (NL), so that a size of a first spot (S1) of the first beam (V1) and a size of a second spot (S2) of the second beam (V2) differ from each other, and
a single scanner (160) is used to control the first beam (V1) and the second beam (V2) to cut the electrode along the notching line (NL).

12. The laser notching apparatus of claim 11, wherein the optical member (130) adjusts a divergence angle of the first beam (V1) or the second beam (V2) so that the first spot (S1) of the first beam (V1) or the second spot (S2) of the second beam (V2), passing through the scanner (160), are different from each other in size.

13. The laser notching apparatus of claim 12, wherein the optical member (130) makes incident angles of the first beam (V1) or the second beam (V2) incident on the single scanner (160) different from each other so that the first spot (S1) and the second spot (S2) are maintained apart by a constant distance.

14. The laser notching apparatus of claim 13, wherein the size of the first spot (S1) is larger than the size of the second spot (S2),
the electrode (10) comprises a current collector (11) and an active material layer (12) stacked on the current collector (11),
the first beam (V1) ablates the active material layer (12), and
the second beam (V2) cuts the current collector (11) exposed by the ablation of the first beam (V1).

15. The laser notching apparatus of claim 14, wherein the optical member (130) comprises a lens unit (131) disposed on the path of the first beam (V1) and the path of the second beam (V2) and configured to form the spot of the first beam (V1) and a spot of the second beam (V2) on the notching line (NL), and a beam expander (135) disposed between the second laser (120) and the optical member (130) on the path of the second beam (V2), and
the beam expander (135) adjusts a divergence angle of the second beam (V2) such that the size of the second spot (S2) of the second beam (V2) that passes through the lens unit (131) is smaller than the size of the first spot (S1).

16. The laser notching apparatus of claim 14, wherein the optical member (130) comprises a lens unit (131) disposed on the path of the first beam (V1) and the path of the second beam (V2) and configured to form a spot of the first beam (V1) and a spot of the second beam (V2) on the notching line (NL), and a light refraction unit (132) disposed on the path of the first beam (V1), and
the light refraction unit (132) rotates and refracts the incident angle of the first beam (V1) such that the first spot (S1) maintains the constant distance from the second spot (S2).

17. The laser notching apparatus of claim 16, wherein the light refraction unit (132) allows the first spot (S1) to rotate around the second spot (S2) and maintain the constant distance from the second spot (S2).

18. The laser notching apparatus of claim 17, wherein the scanner (160) comprises the lens unit (131), and the reflective mirror (133) disposed on the path of the first beam (V1) and the path of the second beam (V2) and configured to control the first beam (V1) and the second beam (V2) incident on the lens unit, allowing the first spot (S1) and the second spot (S2) to move along the notching line (NL).

19. The laser notching apparatus of one of claims 1 and 11, wherein the electrode (10) is in a stationary state or in motion when notching with the use of the first beam (V1) and the second beam (V2) is performed.
